(19) Europäisches Patentamt
European Patent Office
Office européen des brevets

(11) **EP 1 597 538 B1**

(12) **EUROPÄISCHE PATENTSCHRIFT**

(45) Veröffentlichungstag und Bekanntmachung des Hinweises auf die Patenterteilung:
**17.10.2012 Patentblatt 2012/42**

(51) Int Cl.:
***G01B 11/04*** *(2006.01)*    ***G01B 11/245*** *(2006.01)*
***G01B 11/24*** *(2006.01)*    ***G01B 11/02*** *(2006.01)*
***G01B 11/10*** *(2006.01)*

(21) Anmeldenummer: **04700424.7**

(22) Anmeldetag: **07.01.2004**

(86) Internationale Anmeldenummer:
**PCT/CH2004/000003**

(87) Internationale Veröffentlichungsnummer:
**WO 2004/074769 (02.09.2004 Gazette 2004/36)**

(54) **VERFAHREN ZUR BER HRUNGSLOSEN VERMESSUNG EINES OBJEKTS**

METHOD FOR THE CONTACTLESS MEASUREMENT OF AN OBJECT

PROCEDE POUR MESURER UN OBJET SANS CONTACT

(84) Benannte Vertragsstaaten:
**AT BE BG CH CY CZ DE DK EE ES FI FR GB GR HU IE IT LI LU MC NL PT RO SE SI SK TR**

(30) Priorität: **24.02.2003 CH 284032003**

(43) Veröffentlichungstag der Anmeldung:
**23.11.2005 Patentblatt 2005/47**

(73) Patentinhaber: **Cedes Safety & Automation AG
7302 Landquart (CH)**

(72) Erfinder: **DE COI, Beat
CH-7320 Sargans (CH)**

(74) Vertreter: **Grünecker, Kinkeldey,
Stockmair & Schwanhäusser
Leopoldstrasse 4
80802 München (DE)**

(56) Entgegenhaltungen:
**DE-A- 3 238 883    US-A- 4 555 633**

**Beschreibung**

Die Erfindung betrifft ein Verfahren zur berührungslosen Vermessung eines Objekts gemäss dem Obergebriff des Patentanspruchs 1.

In industriellen Prozessen ist es oftmals erforderlich, die Ausdehnung eines Objekts in die Höhe und/ oder die Breite und/ oder die Länge in erster Näherung zu bestimmen, damit diese bei einem folgenden Transport-, Lager- und/ oder Verarbeitungsschritt entsprechend berücksichtigt werden kann. Beispielsweise muss bei einem automatischen Lagersystem die Höhe eines einzulagernden Objekts bestimmt werden. Viele Objekte können nicht mit Kontaktgebern oder dergleichen vermessen werden, sondern es müssen berührungslose Verfahren angewendet werden. Für derartige automatisierte Vermessungsvorgänge werden daher beispielsweise Lichtgitter oder Lichtvorhänge eingesetzt, die vom Objekt passiert werden. Die Vermessung erfolgt durch Feststellung der Strahlunterbrechungen, aus denen auf die Ausdehnung in der jeweiligen Dimension rückgeschlossen werden kann. Bei der Höhenmessung ragt das Objekt in der Regel von unten in das Lichtgitter hinein, da es ja auf einer Palette oder einem Förderband durch das Lichtgitter bzw. den Lichtvorhang transportiert wird. Bei der Höhenmessung geht es darum, den obersten unterbrochenen bzw. den untersten nicht unterbrochenen Lichtstrahl aufzufinden. Dazu werden bei einem Lichtgitter bzw. Lichtvorhang die einzelnen Lichtstrahlen sequentiell abgetastet, um die Unterbrechungen festzustellen. Die Abtastung eines Lichtstrahls besteht darin, ein Sendelement zu aktivieren und gleichzeitig ein gegenüberliegendes Empfangselement für den ausgesendeten Lichtstrahl auszuwerten. Die theoretische Dauer einer Abtastung bzw. eines Scans, die Scanzeit, ergibt sich aus der Abtastzeit pro Lichtstrahl multipliziert mit der Anzahl n der Lichtstrahlen, zuzüglich der Auswertezeit. Die Gleichung dafür lautet:

$$t_{Scan} = t_{Strahl} \times n + t_{Auswertung}$$

Es kann vorkommen, dass das automatisch zu vermessende Objekt genau dann in den Erfassungsbereich eines Lichtstrahls gelangt, nachdem dieser gerade abgetastet wurde. Um diese Fehlerquelle auszuschalten und das Objekt dennoch zu erkennen, muss das gesamte Lichtgitter ein zweites Mal abgetastet werden. Somit ergibt sich in der Praxis die maximale Erfassungszeit als die Zweifache Scanzeit. Die Gleichung für die Erfassungszeit lautet:

$$t_{Erfassung} = t_{scan} \times 2 = (t_{Strahl} \times n + t_{Auswertung}) \times 2$$

In der Praxis liegt die Abtastzeit pro Lichtstrahl bei etwa 100 $\mu$s; die Anzahl n der Strahlen des Lichtgitters beträgt beispielsweise 32; die Auswertezeit beträgt typischerweise etwa 500 $\mu$s. Mit diesen typischen praktischen Werten ergibt sich für die maximale Erfassungszeit $t_{Erfassung}$ ein Wert von 7,4 ms. Dabei ist zu beachten, dass es sich bei diesem Wert um die maximale Erfassungszeit für die Bestimmung der Ausdehnung in nur eine Dimension, der Höhe, handelt Oft kann es erforderlich sein, die Abmessungen eines Objekts in zwei Dimensionen oder sogar in alle drei Dimensionen zu bestimmen. Daraus ist unmittelbar ersichtlich, dass das derzeitige Verfahren zur berührungslosen Vermessung eines Objekts relativ zeitaufwändig ist

DE 3238883 A1 bezieht sich auf eine Messeinrichtung zum Feststellen beziehungsweise Überwachen einer Abmessung. Die Messeinrichtung weist zwei voneinander distanzierte, parallel zueinander verlaufende Messflächen, auf. Auf der Messfläche sind Lichtsender und Lichtempfänger angeordnet. Eine Auswerteeinheit stellt die Unterbrechung des Strahlenganges zwischen einem Lichtsender und einem Lichtempfänger fest. Ein Lichtsender wird aufeinanderfolgend mit zumindest zwei Lichtempfängern angesteuert, und eine Unterbrechung des Strahlenganges durch den zu messenden Gegenstand festgestellt.

Aufgabe der vorliegenden Erfindung ist es daher, diesen Nachteil des Verfahrens des Stands der Technik zu vermeiden. Es soll ein Verfahren zur berührungslosen Vermessung eines Objekts in wenigstens eine Dimension geschaffen werden, welches bei gleich bleibender Genauigkeit eine Erhöhung der Messgeschwindigkeit ermöglicht und insgesamt zu einer Verkürzung der maximalen Erfassungszeit führt.

Die Lösung dieser Aufgaben besteht in einem Verfahren zur berührungslosen Vermessung eines Objekts, welches die im kennzeichnenden Abschnitt des Patentanspruchs 1 angeführten Merkmale aufweist. Weiterbildungen und/oder vorteilhafte Ausführungsvarianten der Erfindung sind Gegenstand der abhängigen Ansprüche.

Die Erfindung schlägt ein Verfahren zur berührungslosen Vermessung eines Objekts (6) in wenigstens einer Dimension vor, bei dem das Objekt (6) in einem räumlich begrenzten Wirkungsbereich eines Abtaststrahlenfeldes (1) abgetastet und aus der Detektion einer oder mehrerer Unterbrechungen der Abtaststrahlen (L) auf die Grösse des Objekts (6) in der vermessenen Dimension geschlossen wird. Das Abtaststrahlenfeld (1) ist aus einer Anzahl direkt adressierbarer Einzelstrahlen (L) aufgebaut. Die strahlenmässige Abtastung des räumlich begrenzten Wirkungsbereichs des Abtaststrahlenfeldes (1) erfolgt nach einem vorgebbaren Schrittmuster unter Verwendung eines vom linearen Sortierverfahren verschiedenen Sortierverfahrens. Ein bevorzugtes Verfahren besteht in der Anwendung eines binären Suchverfahrens.

Die Erfassungszeit zur Vermessung eines Objekts wird massgeblich durch die Dauer und die Zahl der Abtastschritte bestimmt. Eine Verringerung der Abtastschritte bei der Bestimmung der Objektgrosse wirkt sich daher unmittelbar auf die dafür erforderliche Zeitdauer aus. Das Abtastverfahren zur Bestimmung der Stahlunterbrechungen wird dabei auf ein nicht-lineares Sortierverfahren zurückgeführt, nachdem der Wirkungsbereich der Abtasttrahlung als ein von einzelnen direkt adressierbaren Strahlen aufgebautes Abtaststrahlenfeld angesehen werden kann. Entsprechend ist das Prinzip der nicht-linearen Sortierverfahren auf dieses Feld anwendbar.

In einem besonders vorteilhaften Verfahren erfolgt für die Grössenbestimmung des Objekts in der wenigstens einen Dimension die bereichsweise Abtastung des räumlich begrenzten Wirkungsbereichs des Abtaststrahlenfeldes nach dem Prinzip der binären Suche. Das binäre Suchverfahren beruht auf einer forwährenden Halbierung des Suchintervalls unter gleichzeitiger Ausnutzung der Sortierung. Zu diesem Zweck wird der Wirkungsbereich des Strahlungsfeldes in eine Anzahl von direkt adressierbaren Einzelstrahlen zerlegt, welche für den Zweck der Sortierung eine forlaufende auf- oder absteigende Nummer zugeordnet wird. Die Einzelstrahlen können reale Messstrahlen sein. Sie können aber auch als fiktive Messstrahlen angesehen werden, wenn das Objekt beispielsweise von einem bildgebenden System erfasst wird und das erzeugte Bild elektronisch "strahlenförmig" auf "Strahlunterbrechungen" abgetastet wird. Das binäre Suchsystem ist dem linearen Suchsystem hinsichtlich des Zeitbedarfs überlegen. Bei grösserer Anzahl von Einzelstrahlen wächst der Zeitunterschied sehr schnell an. Während bei der linearen Suche die Laufzeit proportional zur Anzahl der Abtaststrahlen anwächst, steigt diese bei der binären Suche nur im Verhältnis zum Zweierlogarithmus der Anzahl der Abtaststrahlen.

Vielfach ist es erforderlich, die Grösse des Objekts in mehr als einer Dimension zu bestimmen. Dazu wird mit Vorteil der räumlich begrenzte Wirkungsbereich des Abtaststrahlenfeldes durch eine Kombination der Prinzipien der linearen und der binären Suche abgetastet. Durch die Kombination der linearen und der binären Suche wird dem Umstand Rechnung getragen, dass das zu vermessende Objekt üblicherweise in beliebiger Orientierung in das Abtaststrahlenfeld transportiert wird. Daher ist es zunächst erforderlich, in der jeweiligen zu vermessenden Dimension den Anfang, das heisst einen äussersten Rand des Objekts zu bestimmen, ab dem die Abmessung des Objekts in die jeweilige Dimension bestimmt wird. Dieser erste Schritt entspricht praktisch jeweils einer Urprungsbestimmung und wird sequentiell in einem lienaren Suchverfahren durchgeführt. Nachdem der Ursprung festgelegt worden ist, kann die weitere eigentliche Vermessung des Objekts durch Anwendung des binären Suchverfahrens vereinfacht und verkürzt werden.

Zur Durchführung des erfindungsgemässen Verfahrens wird das zu vermessende Objekt beispielsweise in einen von den Abtaststrahlen aufgespannten Vorhang eingebracht. Dabei sind beispielsweise auf einer Längsseite eines Transportbandes eine festgelegte Anzahl von Strahlungsquellen in regelmässigen Abständen übereinander angeordnet. An der anderen Längsseite des Transportbandes, den Strahlungsquellen gegenüberliegend sind eine gleich grosse Anzahl von Detektoren für die von den Strahlungsquellen emittierte Strahlung übereinander angeordnet. Das in einer Dimension zu vermessende Objekt wird über das Transportband in den Bereich der Abtaststrahlen gebracht und dort nach dem erfindungsgemässen Verfahren vermessen. Für eine Vermessung des Objekts in zwei oder in allen drei Dimensionen kann auch ein flächiges oder räumliches Gitter aufgespannt sein.

Das Abtaststrahlenfeld in Form eines Vorhangs oder eines flächigen bzw. räumlichen Gitters ist mit Vorteil Licht im sichtbaren oder auch im unsichtbaren Spektralbereich. Es kann auch Ultraschall- oder Radarstrahlung eingesetzt werden. Es versteht sich, dass immer auch jeweils auf die von der Strahlungsquelle emittierte Abtaststrahlung abgestimmte Detektoren verwendet werden.

Vielfach wird nicht das Objekt direkt vermessen, sondern es wird ein Abbild des Objekts abgetastet. Das Abbild des Objekts wird dabei von einem ein- oder zweidimensional abtastbaren Bildbereich eines bildgebenden Systems festgelegt. Beispielsweise handelt es sich bei dem bildgebenden System um eine Aufnahmekamera, ein Abbild eines Objekts in einem Raster-Turunelmikroskop oder von einem Elektronen-Kraft-Mikroskop. Das Abbild des Objekts kann aber auch von einer einer induktiven Messung, beispielswese bei ferromagnetischen Stoffen, oder von einer kapazitiven Messung für nicht oder schwach leitende Stoffe erzeugt sein. Grundsätzlich können alle Abbildungen eines Objekts, die dessen reales Aussehen oder die Ausdehnung einer interessierenden Messgrösse wiedergeben zur Vermessung herangezogen werden.

Es erweist sich von Vorteil, wenn die Anzahl von Abtaststrahlen für jede auszumessende Dimension des Objekts wenigstens acht beträgt. Das binäre Suchsystem ist dem linearen Suchsystem etwa ab einer Anzahl von acht Abtaststrahlen hinsichtlich des Zeitbedarfs überlegen. Bei grösseren Anzahlen von Abtaststrahlen wächst der Zeitunterschied sehr schnell an. Während bei der linearen Suche die Laufzeit proportional zur Anzahl der Abtaststrahlen anwächst, steigt diese bei der binären Suche nur im Verhältnis zum Zweierlogarithmus der Anzahl der Abtaststrahlen.

Indem das Objekt derart in den räumlich begrenzten Wirkungsbereich des Abtaststrahlenfeldes eingebracht wird, dass wenigstens in einer seiner zu bestimmenden Dimensionen die Objektgrenze mit einer Randbegrenzung des räumlich begrenzten Wirkungsbereichs des Abtaststrahlenfeldes zusammenfällt, entfällt für diese Dimension die Nulllinienfestlegung. Zur Bestimmung der Grösse des Objekts in dieser Dimension kann sofort das binäre Suchverfahren eingesetzt werden. Im Idealfall eines quader- oder würfelförmigen Objekts kann dieses sogar derart in einen Ursprung des räumlichen Abtaststrahlenfeldes plaziert werden, dass für alle Dimensionsbestimmungen die Nulllinienfestlegung entfallen kann. In der Regel wird es sich jedoch um mehr oder weniger unregelmässig geformte Objekte handeln, die in beliebiger Orientierung und Lage auf dem Transportmittel in das Abtaststrahlenfeld eingebracht werden. Dabei bedeutet es schon eine grosse Vereinfachung für das Messverfahren, wenn beispielsweise bei einem Transport des Objekts über ein Transportband die Abtaststrahlenfeldkomponente über der horizontal verlaufenden Transportbandoberfläche, die im allgemeinen zur Höhenbestimmung des Objekts dient, von der Transportbandoberfläche begrenzt ist. Der Abtaststrahl mit dem Index 1 verläuft dabei in unmittelbarer Nachbarschaft und parallel zur Transportbandoberfläche von einer Längsseite des Transportbandes zur anderen. Die weiteren Abtaststrahlen zur Höhenbestimmung des Objekts sind senkrecht darüber angeordnet und fortlaufend aufsteigend nummeriert.

Die Vermessung des Objekts kann am ruhenden Objekt erfolgen. Aus Gründen des schnelleren Durchsatzes erweist es sich jedoch von Vorteil, wenn zwischen dem zu vermessenden Objekt und dem Abtaststrahlenfeld während der Messung eine Relativbewegung erfolgt. Dies kann beispielsweise dadurch erreicht werden, dass das Objekt kontinuierlich durch den Wirkungsbereich des Abtaststrahlenfeldes transportiert wird. Auch ein Transport des Wirkungsbereichs des Abtaststrahlenfeldes über ein ruhendes Objekt ist möglich. Beispielsweise bei automatischen Waschanlagen steht manchmal das Fahrzeug still und die Messeinrichtung, welche die vertikale und horizontale Kontur des Fahrzeugs aufnimmt, wird über das Fahrzeug bewegt. Mit dem gespeicherten Bild werden dann im nachfolgenden Waschgang die vertikalen und horizontalen Bürsten gesteuert. Eine ähnliche Anwendung ergibt sich in automatischen Lakkieranlagen, wo das zu lackierende Objekt zuerst in ruhendem Zustand vermessen und anschliessend in der Lackierkammer aufgrund des gespeicherten Abbildes lackiert wird. Die Relativgeschwindigkeit ist dabei auf die maximale Erfassungszeit zur Vermessung des Objekts abgestimmt. Mit den üblichen Transportmitteln ist die Verweildauer des zu vermessenden Objekts im Messstrahlenfeld deutlich grösser als die Erfassungszeit bei der Anwendung des erfindungsgemässen Verfahrens.

Weitere Vorteile und Merkmale der Erfindung ergeben sich aus der nachfolgenden Beschreibung einer beispielsweise Variante des erfindungsgemässen Verfahrens. Die schematischen Zeichnungen dienen zur Illustration des Verfahrens. Es zeigen:

Fig. 1    einen horizontal angeordneten Vorhang einer elektromagnetischen Abtaststrahlung mit einem darin angeordneten Objekt und eine zugeordnete Suchtabelle;

Fig. 2    ein beliebig in einem Abtaststrahlenfeld angeordnetes Objekt;

Fig. 3    ein bildgebendes System zur Vermessung eines Objekts; und

Fig. 4    ein Diagramm zur Erläuterung der Zeitersparnis bei Anwendung des erfindungsgemässen Verfahrens.

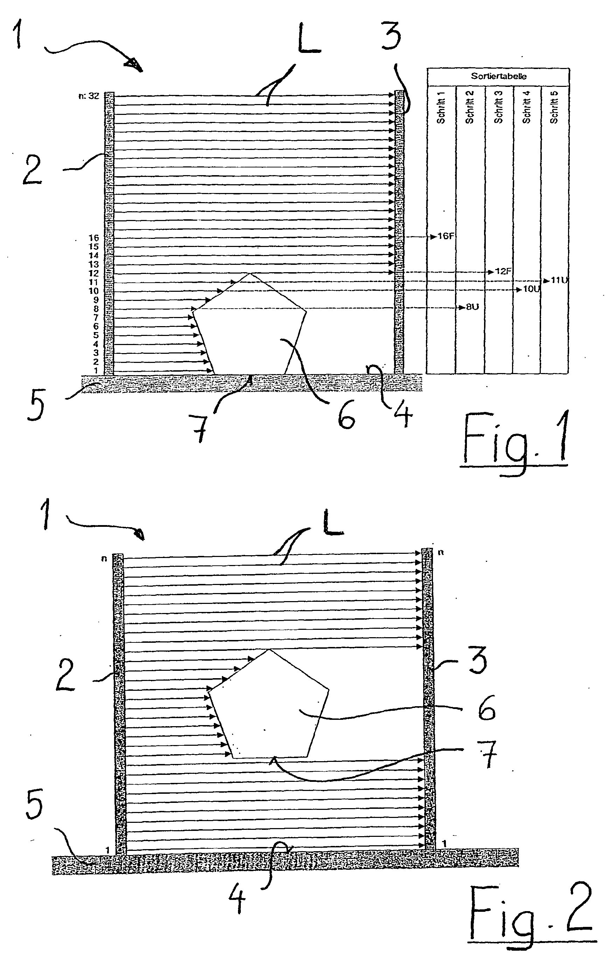

Fig.1 zeigt ein horizontal verlaufendes, vorhangartiges Abtaststrahlenfeld, das gesamthaft mit dem Bezugszeichen 1 versehen ist. Das Abtaststrahlenfeld 1 ist von einzelnen Abtaststrahlen L aufgespannt, die jeweils von einem Sendeelement 2 emittiert und von einem gegenüberliegenden Empfänger 3 detektiert werden. Das Abtaststrahlenfeld kann ein elektromagnetisches Strahlenfeld, beispielsweise ein Vorhang aus Licht oder Radarstrahlen, oder ein Ultraschallshahlenfeld sein. Die einzelnen Abtaststrahlen sind direkt adressierbar. Die einzelnen Abtaststrahlen L verlaufen dabei im gleichen Abstand voneinander. Im dargestellten Ausführungsbeispiel umfasst das Abtaststrahlenfeld insgesamt 32 einzelne Abtaststrahlen L. Anstelle der Empfänger 3 könnten auch reflektierende Elemente angeordnet sein, welche die emittierten Abtaststrahlen L zum Sender 2 zurück reflektieren. In diesem Fall ist jeder Sender zugleich auch als Empfänger ausgebildet. Sender 2 und Empfänger 3 erstrecken sich oberhalb einer Transporteinrichtung 5 für ein zu vermessendes Objekt 6, das mit seiner Unterseite 7 auf dessen Oberfläche 4 aufliegt. Beispielsweise handelt es sich bei der Transporteinrichtung 5 um ein Transportband oder um eine Palette oder dergleichen. Die Abtaststrahlen L verlaufen etwa parallel zu der Oberfläche 4 der Transporteinrichtung 5. Das Abtaststrahlenfeld 1 erstreckt sich im wesentlichen senkrecht über der Transporteinrichtung 5. Der unterste Abtaststrahl L verläuft in unmittelbarer Nachbarschaft zur Oberfläche 4 der Transporteinrichtung 5. Mit einem derart aufgebauten vorhangartigen Abtastfeld 1 kann die Höhe eines Objekts 6 bestimmt werden. Dies ist beispielsweise für die automatische Lagerung des Objekts 6 erforderlich, um ein Fach geeigneter Höhe auszuwählen.

Mit der dargestellten Anordnung ist die Höhenbestimmung des Objekts auf eine Feststellung der Anzahl unterbrochener Abtaststrahlen L zurückgeführt. Dazu sind die Abtaststrahlen L beginnend von der Oberfläche 4 der Transporteinrichtung 5 aufsteigend durchnummeriert. Der in unmittelbarer Nachbarschaft zur Oberfläche4 der Transporteinrichtung verlaufende Abtaststrahl L erhält beispielsweise den Index n = 1. Der darauf folgende Abtaststrahl L ist mit 2 bezeichnet usw. Der den Wirkungsbereich des Abtaststrahlenfeldes 1 nach oben begrenzende oberste Abtaststrahl L trägt den Index n = 32. Es versteht sich, dass die Durchnummerierung auch in umgekehrter Reihenfolge vorgenommen werden kann.

Zur Höhenbestimmung des Objekts 1 muss somit ausgehend vom ersten unterbrochenen Abtaststrahl L mit dem Index n = 1 der oberste unterbrochene Abtaststrahl L bzw. der erste frei zum Empfänger 6 durchgelassene Abtaststrahl L ermittelt werden. Bei dem aus dem Stand der Technik bekannten sequentiellen Suchverfahren werden die einzelnen Abtaststrahlen L sequentiell abgetastet, um die Unterbrechungen festzustellen. Die Abtastung besteht darin, ein Sendelement 2 zu aktivieren und gleichzeitig ein gegenüberliegendes Empfangselement 3 für den ausgesendeten Abtaststrahl L auszuwerten. Die theoretische Dauer einer Abtastung bzw. eines Scans, die Scanzeit, ergibt sich aus der Abtastzeit pro Abtaststrahl multipliziert mit der Anzahl n der Abtaststrahlen, zuzüglich der Auswertezeit. Die Gleichung dafür lautet:

$$t_{Scan} = t_{Strahl} \times n + t_{Auswertung}$$

Es kann vorkommen, dass das automatisch zu vermessende Objekt genau dann in den Erfassungsbereich eines Abtaststrahls L gelangt, nachdem dieser gerade abgetastet wurde. Um diese Fehlerquelle auszuschalten und das Objekt dennoch zu erkennen, muss das gesamte Abtaststrahlenfeld 1 ein zweites Mal abgetastet werden. Somit ergibt sich in der Praxis die maximale Erfassungszeit als die Zweifache Scanzeit.

Die Gleichung für die Erfassungszeit lautet:

$$t_{Erfassung} = t_{scan} \times 2 = (t_{Strahl} \times n + t_{Auswertung}) \times 2$$

In der Praxis liegt die Abtastzeit pro Lichtstrahl bei etwa 100 $\mu$s; die Anzahl n der Strahlen des Lichtgitters beträgt beispielsweise 32; die Auswertezeit beträgt typischerweise etwa 500 $\mu$s. Mit diesen typischen praktischen Werten ergibt sich für die $t_{Erfassung}$ ein Wert von 7,4 ms.

Zum Unterschied von dem linearen Suchverfahren des Stands der Technik schlägt die Erfindung ein nicht-lineares Suchverfahren, insbesondere ein binäres Sortierverfahren vor. Dieses beruht im wesentlichen auf einer fortlaufenden Halbierung des Suchintervalles bei gleichzeitiger Ausnutzung der Sortierung der Abtaststrahlen. Zunächst wird das Intervall der insgesamt 32 Abtaststrahlen L halbiert und der Abtaststrahl mit dem Index n = 16 aktiviert und abgefragt. Wenn dieser Abtaststrahl L frei zu seinem Empfängerelement 3 gelangen kann, wird daraus geschlossen, dass das Objekt 6 sich nur in der unteren Hälfte des Abtaststrahlenfeldes 1 mit den Abtaststrahlen mit dem Index 1 bis 16 erstreckt. In der in Fig.1 dargestellten Sortiertabelle ist der frei passierende Abtaststrahl als 16F markiert. In einem zweiten Schritt wird die untere Hälfte des Abtaststrahlenfeldes, das untere Intervall erneut halbiert und der Abtaststrahl L mit dem Index 8 aktiviert und abgefragt. Dabei wird festgestellt, dass der Abtaststrahl mit dem Index 8 unterbrochen ist. Dies ist in der Sortiertabelle mit 8U angegeben. Aus diesem Ergebnis wird geschlossen, dass das obere Ende der Erstreckung des Objektes 6 im Intervall der Abtaststrahlen mit dem Index n = 9 bis n = 16 liegen muss. Diese Intervall wird halbiert und der Abtaststrahl mit dem Index n = 12 abgefragt. Dabei wird festgestellt, dass dieser Abtaststrahl frei passieren kann. Dies ist in der Sortiertabelle mit 12F notiert. In Schritt 4 wird daher das Intervall zwischen dem Abtaststrahl mit dem Index 12 und dem Abtaststrahl mit dem Index 8 halbiert und der Abtaststrahl mit dem Index 10 abgefragt. Dabei wird festgestellt, dass dieser unterbrochen ist, was in der Sortiertabelle mit 10U notiert ist. Somit bleibt in Schritt 5 nur noch das Intervall zwischen dem unterbrochenen Abtaststrahl mit dem Index n = 10 und dem nächsten freien Abtaststrahl mit dem Index n = 12 zu untersuchen. Dies führt schliesslich zum Abtaststrahl mit dem Index n = 11. Dabei wird festgestellt, dass dieser gleichfalls unterbrochen ist, was in der Sortiertabelle mit 11U festgehalten ist. Durch das erfindungsgemässe Suchverfahren konnte somit in nur 5 Schritten festgestellt werden, dass das Ende der oberen Erstreckung des bezüglich seiner Höhe zu vermessenden Objekts 6 zwischen den Abtaststrahlen mit dem Index n = 11 und dem Index n = 12 liegt. Damit ist die Höhe des Objekts bis auf eine Genauigkeit in der Grössenordnung des Abstands der beiden benachbarten Abtaststrahlen L bestimmt.

Die Erfassungszeit ist durch die Gleichung

$$t_{Erfassung} = t_{scan} \times 2 = (t_{Strahl} \times n + t_{Auswertung}) \times 2$$

festgelegt. Mit dem Wert n = 5 für die Anzahl der Einzelscans ergibt sich für das beschriebene Ausführungsbeispiel eine Erfassungszeit $t_{Erfassung}$ = 2 ms. Dies entspricht gegenüber dem linearen Suchverfahren einer Zeitersparnis von 5,5 ms oder 73%.

Das erfindungsgemässe Verfahren ist dann am schnellsten durchführbar, wenn in der zu bestimmenden Dimension eine Objektgrenze mit einer Erfassungsgrenze des elektromagnetischen Strahlungsfeldes zusammenfällt. Bei eindimensionalen Höhenbestimmungen ist dieses Kriterium in der Regel erfüllt. Sollen jedoch die Ausdehnung in einer anderen Dimension oder in zwei oder in allen drei Dimensionen bestimmt werden, befindet sich das Objekt meist irgendwo im Erfassungsbereich des elektromagnetischen Feldes. Diese Situation ist beispielsweise in Fig. 2 dargestellt, in der es wiederum um die Bestimmung der Höhe des Objekts geht. In diesem Fall wird zunächst unter Anwendung des bekannten linearen Suchverfahrens der untere oder der obere Anfang des Objekts bestimmt. Ist diese eine Grenze der Ausdehnung bestimmt, wird der dieser Position zugeordnete Abtaststrahl als Nulllinie definiert. Die weitere Dimensionsbestimmung kann dann nach dem zuvor geschilderten erfindungsgemässen Verfahren erfolgen. Es kann auch zunächst nur das Objekt innerhalb des Abtaststrahlenfeldes gesucht werden. Die obere und die untere Objektgrenze können dann aufwärts und abwärts nach dem erfindungsgemässen Verfahren bestimmt werden. In dem am Beispiel gemäss Fig. 2 geschilderten Fall erreicht die Zeitersparnis gegenüber dem reinen linearen Verfahren nicht den maximal möglichen Wert. Die für die kombinierte lineare und binäre Suche erforderliche Zeit ist aber immer noch geringer als die An wendung des linearen Suchverfahrens allein.

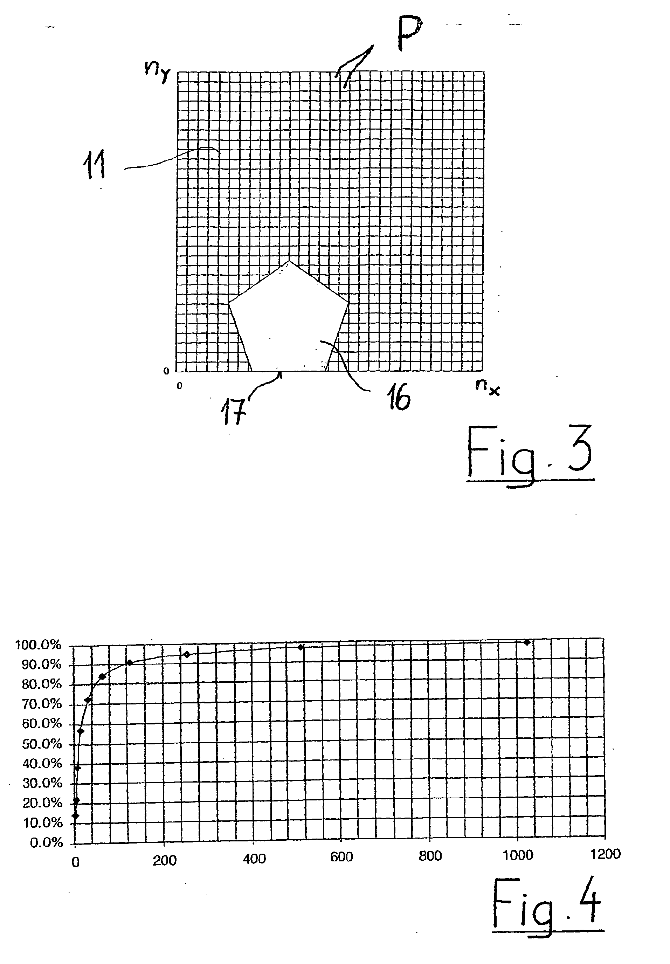

Fig. 3 zeigt ein Abbild 16 eines Objekts, beispielsweise ein Bild einer Abtastkamera. Es könnte auch ein Abbild des Objekts sein, wie es in der Raster-Tunnel-Mikroskopie oder in der Elektronen-Kraft-Mikroskopie erzeugt wird. Andere Abbilder eines Objekts können beispielsweise aus induktiven Messungen für ferromagnetische Stoffe oder aus kapazitiven Messungen für nicht oder schwach leitende Stoffe stammen. Im Gegensatz zu einem Abtaststrahlenvorhang kann hier das Abbild 16 des Objekts in zwei Dimensionen abgetastet bzw. abgefragt werden.

Die Grössen $n_y$ und $n_x$ geben die Zeilen- bzw. die Spaltennummer des Bildes an. Die Zeilen und Spalten sind dabei von einzelnen Bildelementen (Pixeln) aufgebaut und sind direkt adressierbar. Die Objektbasis 17 fällt mit der zeilenmässigen Erfassungsgrenze des Abtaststrahlenfeldes 11 zusammen. Daher kann das erfindungsgemässe Suchverfahren in Zeilenrichtung (y-Richtung) in Analogie zu dem anhand von Fig. 1 erläuterten Suchverfahren durchgeführt werden. Bezüglich der Abtastspalten nx sind die Verhältnisse ähnlich denjenigen, die anhand von Fig. 2 erläutert wurden. Zur Bestimmung der Dimension des Objekts in Spaltenrichtung (x-Richtung) muss daher zunächst das Abbild 16 des Objekt aufgefunden werden. Dies erfolgt beispielsweise wieder über ein lineares Suchverfahren. Ist das Abbild 16 des Objekts im zweidimensionalen Abtaststrahlenfeld 11 gefunden, kann die Bestimmung der Objektgrenzen wieder nach dem erfindungsgemässen Verfahren durchgeführt werden.

Das erfindungsgemässe Verfahren ist bei eindimensionalen Abtaststrahlenfeldern, wie z.B. Lichtvorhängen, ebenso anwendbar wie bei zweidimensionalen oder dreidimensionalen Abtastfeldern. Ein zweidimensionales Abtastfeld kann beispielsweise von einem Lichtgitter aufgespannt sein oder von eine bildgebende System, z.B. einer Aufnahmekamera, eines Raster-Tunnel-Mikoskops oder eines Elektronen-Kraft-Mikroskops gebildet sein. Es können auch Abbilder aus induktiven oder kapazitiven Messungen und ähnlichen Analysen für die Vermessung herangezogen werden. Die Abtaststrahlung kann elektromagnetische Strahlung, beispielsweise Licht im sichtbaren und im unsichtbaren Spektrum oder Radar, oder Ultraschallstrahlung sein. Das erfindungsgemässe Verfahren ist bei jeder Art von Sensor einsetzbar, der ein linienförmiges, ebenes oder räumliches Abtastfeld aufspannt. Die Objekte können sich während der Messung in Ruhe befinden. Wegen der hohen Geschwindigkeit des Verfahrens können die Objekte auch durch das Abtastfeld bewegt werden.

Fig. 4 gibt in Diagrammform die Zeitersparnis bei Anwendung des erfindungsgemässen Verfahrens gegenüber dem linearen Suchverfahren wieder. Die Angaben beziehen sich dabei auf eine eindimensionale Messung, bei der eine Objektgrenze mit einer Erfassungsgrenze des Abtaststrahlenfeldes zusammenfällt. Auf der Abszisse ist die Anzahl der Abtaststrahlen angegeben; die Ordinate zeigt die Zeitersparnis in %. Dabei wird jeweils auf ein rein lineares Suchverfahren bei gleich grosser Anzahl von Abtaststrahlen Bezug genommen. Es ist unmittelbar ersichtlich, dass das erfindungsgemässe Verfahren enorme Geschwindigkeitsvorteile bringt, so dass auch kleinere Objekte, die sich relativ schnell durch das Abtaststrahlenfeld bewegen, erfasst und ausgemessen werden können.

## Patentansprüche

1. Verfahren zur berührungslosen Vermessung eines Objekts (6; 16) in wenigstens einer Dimension, bei dem das Objekt (6; 16) in einem räumlich begrenzten Wirkungsbereich eines Abtaststrahlenfeldes (1; 11) abgetastet wird und aus der Detektion einer oder mehrerer Unterbrechungen der Abtaststrahlen auf die Größe des Objekts (6; 16) in der vermessenen Dimension geschlossen wird, wobei das Abtaststrahlenfeld aus einer Anzahl direkt adressierbarer Einzelstrahlen (L; P) aufgebaut ist, und die Abtastung nach einem vorgebbaren Schrittmuster erfolgt **dadurch gekennzeichnet, dass** zur Abtastung ein binäres Suchverfahren eingesetzt wird.

**2.** Verfahren nach Anspruch 1, **dadurch gekennzeichnet, dass** die Grössenbestimmung des Objekts (6; 16) in der wenigstens einen Dimension durch eine bereichsweise Abtastung des Abtaststrahlenfeldes (1; 11) nach dem Prinzip der binären Suche erfolgt.

**3.** Verfahren nach Anspruch 2, **dadurch gekennzeichnet, dass** die Grösse des Objekts (6; 16) in mehr als einer Dimension bestimmt wird und der räumlich begrenzte Wirkungsbereich des Abtaststrahlenfeldes (1; 11) durch eine Kombination der Prinzipien der linearen und der binären Suche abgetastet wird.

**4.** Verfahren nach einem der vorangehenden Ansprüche, **dadurch gekennzeichnet, dass** das Objekt (6) in den Wirkungsbereich eines von einzelnen Abtaststrahlen (L) aufgespannten Strahlenvorhangs (1) oder eines ebenen oder räumlichen Strahlengitters eingebracht wird.

**5.** Verfahren nach einem der vorangehenden Ansprüche, **dadurch gekennzeichnet, dass** das Objekt (6) in ein Abtaststrahlenfeld (1) aus elektromagnetischer Strahlung (L) oder aus Ultraschallstrahlung eingebracht wird.

**6.** Verfahren nach einem der vorangehenden Ansprüche, **dadurch gekennzeichnet, dass** das Objekt (6) in ein Abtaststrahlenfeld aus elektromagnetischer Strahlung (L) im sichtbaren oder unsichtbaren Spektralbereich oder Radarstrahlung eingebracht wird.

**7.** Verfahren nach einem der Ansprüche 1 - 4, **dadurch gekennzeichnet, dass** ein Abbild (16) des zu vermessenden Objekts abgetastet wird.

**8.** Verfahren nach Anspruch 7, **dadurch gekennzeichnet, dass** das Abbild (16) des Objekts durch einen ein- bzw. zweidimensional abtastbaren Bildbereich (11) eines bildgeben Systems, beipielsweise einer Aufnahmekamera, eines Abbildes eines Rastertunnel-Mikroskops oder eines Elektronen-Kraft-Mikroskops, oder einer bildlich umgesetzten kapazitiven oder induktiven Messung und dergleichen festgelegt wird.

**9.** Verfahren nach einem der vorangehenden Ansprüche, **dadurch gekennzeichnet, dass** die Anzahl von Abtaststrahlen für jede auszumessende Dimension des Objekts wenigstens acht beträgt.

**10.** Verfahren nach einem der vorangehenden Ansprüche, **dadurch gekennzeichnet, dass** das Objekt (6; 16) derart in den räumlich begrenzten Wirkungsbereich des Abtaststrahlenfeldes (1; 11) eingebracht wird, dass wenigstens in einer seiner zu bestimmenden Dimensionen die Objektgrenze (7; 17) mit einer Randbegrenzung des räumlich begrenzten Wirkungsbereichs des Abtaststrahlenfeldes (1; 11) zusammenfällt.

**11.** Verfahren nach einem der vorangehenden Ansprüche, **dadurch gekennzeichnet, dass** während der Messung eine Relativbewegung zwischen dem zu vermessenden Objekt und dem Abtaststrahlenfeld (1; 11) erfolgt.

**12.** Verfahren nach Anspruch 11, **dadurch gekennzeichnet, dass** das zu vermessende Objekt während der Messung, vorzugsweise kontinuierlich, durch den Wirkungsbereich des Abtaststrahlenfeldes (1; 11) transportiert wird.

**13.** Verfahren nach Anspruch 11 oder 12, **dadurch gekennzeichnet, dass** zur Vermessung ein Bild des Objekts aufgenommen, abgespeichert und ausgewertet wird, und in einem nachfolgenden Schritt die ermittelten Messdaten zur Steuerung von Behandlungs- und Bearbeitungsgeräten für das Objekt verwendet werden.

**Claims**

**1.** Method for the contactless measurement of an object (6; 16) in at least one dimension, in which the object (6; 16) is scanned in a spatially delimited effective zone of a scanning-beam field (1; 11) and the size of the object (6; 16) in the measured dimension is deduced from detecting one or more interruptions of the scanning beams, with the scanning-beam field being built up from a number of directly addressable individual beams (L; P) and the scan being carried out according to a predeterminable pattern of steps, **characterized in that** a binary search method is used for the scan.

**2.** Method according to Claim 1, **characterized in that** the size of the object (6; 16) in the at least one dimension is determined by an area-by-area scan of the scanning-beam field (1; 11) according to the principle of the binary search.

3. Method according to Claim 2, **characterized in that** the size of the object (6; 16) is determined in more than one dimension and the spatially delimited effective zone of the scanning-beam field (1; 11) is scanned by a combination of the principles of the linear and the binary search.

4. Method according to one of the preceding claims, **characterized in that** the object (6) is introduced into the effective zone of a beam curtain (1) spanned by individual scanning beams (L) or of a planar or volumetric beam grid.

5. Method according to one of the preceding claims, **characterized in that** the object (6) is introduced into a scanning-beam field (1) of electromagnetic radiation (L) or of ultrasound radiation.

6. Method according to one of the preceding claims, **characterized in that** the object (6) is introduced into a scanning-beam field of electromagnetic radiation (L) in the visible or invisible spectral range or of radar radiation.

7. Method according to one of Claims 1-4, **characterized in that** an image (16) of the object to be measured is scanned.

8. Method according to Claim 7, **characterized in that** the image (16) of the object is set by a one-dimensional or two-dimensional image region (11), which can be scanned, of an imaging system, for example of a recording camera, of an image of a scanning tunnel microscope or of an electron force microscope, or by a capacitive or inductive measurement or that like that has been converted into an image.

9. Method according to one of the preceding claims, **characterized in that** the number of scanning beams for each dimension of the object to be measured is at least eight.

10. Method according to one of the preceding claims, **characterized in that** the object (6; 16) is introduced into the spatially delimited effective zone of the scanning-beam field (1; 11) such that the object boundary (7; 17) coincides with a spatial delimitation of the spatially delimited effective zone of the scanning-beam field (1; 11), at least in one of the dimensions of the object to be determined.

11. Method according to one of the preceding claims, **characterized in that** during the measurement there is relative movement between the object to be measured and the scanning-beam field (1; 11).

12. Method according to Claim 11, **characterized in that** during the measurement the object to be measured is transported, preferably in a continuous fashion, through the effective zone of the scanning-beam field (1; 11).

13. Method according to Claim 11 or 12, **characterized in that** that, for measurement purposes, an image of the object is recorded, stored and evaluated and, in a subsequent step, the established measurement data is used for controlling treatment and processing instruments for the object.

**Revendications**

1. Procédé de mesure sans contact d'un objet (6 ; 16) suivant au moins une dimension, dans lequel l'objet (6 ; 16) est balayé dans une zone effective limitée spatialement d'un champ de faisceaux de balayage (1 ; 11) et la taille de l'objet (6 ; 16) est déterminée par détection d'une ou plusieurs interruptions des faisceaux de balayage suivant la dimension mesurée, le champ de faisceaux de balayage étant construit à partir d'un certain nombre de faisceaux individuels directement adressables (L ; P), et le balayage s'effectuant suivant un motif de pas prédéterminé, **caractérisé en ce qu'**une méthode de recherche binaire est utilisée pour le balayage.

2. Procédé selon la revendication 1, **caractérisé en ce que** la détermination de la taille de l'objet (6 ; 16) suivant l'au moins une dimension s'effectue par un balayage par zones du champ de faisceaux de balayage (1 ; 11) selon le principe de la recherche binaire.

3. Procédé selon la revendication 2, **caractérisé en ce que** la taille de l'objet (6 ; 16) est déterminée suivant plus d'une dimension et la zone effective limitée spatialement du champ de faisceaux de balayage (1 ; 11) est balayée par une combinaison des principes de recherche linéaire et binaire.

4. Procédé selon l'une quelconque des revendications précédentes, **caractérisé en ce que** l'objet (6) est introduit dans la zone effective d'un rideau de faisceaux (1) formé par des faisceaux de balayage individuels (L) ou d'un réseau de faisceaux plan ou spatial.

5. Procédé selon l'une quelconque des revendications précédentes, **caractérisé en ce que** l'objet (6) est introduit dans un champ de faisceaux de balayage (1) constitué d'un rayonnement électromagnétique (L) ou d'un rayonnement ultrasonore.

6. Procédé selon l'une quelconque des revendications précédentes, **caractérisé en ce que** l'objet (6) est introduit dans un champ de faisceaux de balayage constitué d'un rayonnement électromagnétique (L) dans la région spectrale visible ou invisible ou d'un rayonnement radar.

7. Procédé selon l'une quelconque des revendications 1 à 4, **caractérisé en ce qu'**une image de l'objet à mesurer (16) est balayée.

8. Procédé selon la revendication 7, **caractérisé en ce que** l'image (16) de l'objet est déterminée à travers une zone d'image mono- ou bidimensionnelle pouvant être balayée (11) d'un système de formation d'image, par exemple d'une caméra de prise de vues, d'une image d'un microscope à effet tunnel à balayage ou d'un microscope à force électronique, ou d'une mesure capacitive ou inductive pouvant être convertie en image ou autre.

9. Procédé selon l'une quelconque des revendications précédentes, **caractérisé en ce que** le nombre de faisceaux de balayage pour chaque dimension à mesurer de l'objet est d'au moins huit.

10. Procédé selon l'une quelconque des revendications précédentes, **caractérisé en ce que** l'objet (6 ; 16) est introduit dans la zone effective spatialement limitée du champ de faisceaux de balayage (1 ; 11) de telle sorte que suivant au moins l'une de ses dimensions à déterminer, la limite (7 ; 17) de l'objet coïncide avec une délimitation du bord de la zone d'influence spatialement limitée du champ de faisceaux de balayage (1 ; 11).

11. Procédé selon l'une quelconque des revendications précédentes, **caractérisé en ce que** pendant la mesure, un mouvement relatif entre l'objet à mesurer et le champ de faisceaux de balayage (1 ; 11) est effectué.

12. Procédé selon la revendication 11, **caractérisé en ce que** l'objet à mesurer est transporté lors de la mesure, de préférence en continu, à travers la zone effective du champ de faisceaux de balayage (1 ; 11).

13. Procédé selon la revendication 11 ou 12, **caractérisé en ce que**, pour la mesure, une image de l'objet est acquise, stockée et évaluée, et **en ce que**, lors d'une étape suivante, les données de mesure obtenues sont utilisées pour commander des dispositifs de transformation et de traitement pour l'objet.

1

L

3

n: 32

2

| | Sortiertabelle | | | |
|---|---|---|---|---|
| Schritt 1 | Schritt 2 | Schritt 3 | Schritt 4 | Schritt 5 |

16
15
14
13
12
11
10
9
8
7
6
5
4
3
2
1

→16F

→12F →11U

→10U

→8U

5

7

6

4

_Fig. 1_

1

L

n

2

3

6

7

5

1

4

_Fig. 2_

$P$

$n_y$

11

0

0    17    16    $n_x$

**Fig. 3**

100.0%
90.0%
80.0%
70.0%
60.0%
50.0%
40.0%
30.0%
20.0%
10.0%
0.0%

0    200    400    600    800    1000    1200

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3238883 A1